# EUROPEAN PATENT APPLICATION

(11) **EP 2 472 396 A1**
(43) Date of publication of application: **04.07.2012**
(21) Application number: 09850076.2
(22) Date of filing: 01.10.2009
(51) Int. Cl.: G06F 9/46, G06F 13/10

(54) **COMPUTER DEVICE**

(71) Applicant: Mitsubishi Electric Corporation, Tokyo 100-8310 (JP)
(72) Inventor: IDEHARA, Akio, Tokyo 100-8310 (JP); YAMAMOTO, Hitoshi, Tokyo 100-8310 (JP)
(74) Representative: Pfenning, Meinig & Partner GbR
(86) International application number: PCT/JP2009/067182
(87) International publication number: WO 2011/039887

(57) **Abstract**

A specific one of shared devices 601 is associated with a non-privileged OS 200 not having control rights of the shared devices 601, as a specified device, and a control right of the specified device is given to a privileged OS 100 until activation of the non-privileged OS 200. When the non-privileged OS 200 is activated, the control right of the specified device is transferred from the privileged OS 100 to the non-privileged OS 200. Thus, when the non-privileged OS 200 uses the specified device, the non-privileged OS 200 can directly issue a request to use the specified device. Real-time responsiveness needed for the non-privileged OS 200 may be thereby ensured without the need for waiting for processes of a VM 300 and the privileged OS 100.

## Description

### Technical Field

The present invention relates to a computer apparatus including a plurality of OSs (Operating Systems).

### Background Art

In recent years, there is a demand for improving processing capability of computer apparatuses including embedded apparatuses such as factory automation apparatuses or vehicle-mounted apparatuses. The demand arises due to addition of a function to conventional types of apparatuses or enhancing system function.
In response to such a demand, a multi-core has been introduced. The multi-core is configured by a plurality of arithmetic operation processing units (cores) of CPU (Central Processing Unit), thereby achieving improvement of processing capability while reducing power consumption.
In order to efficiently use a computer including the multi-core, it is necessary to improve parallelism of processing and distribute the processing to the respective cores.
As a method of implementing this, a method of deploying a plurality of OSs such as a real-time operating system (Real-Time Operating System) (hereinafter referred to as an RTOS) having high real-time responsiveness and a general-purpose OS on which a wide variety of applications exist, may be considered.
Conventionally, in embedded apparatuses including such a plurality of OSs, each OS exclusively uses input/output devices such as a network device and a serial communication device. Such devices cannot be shared by the plurality of OSs.
Then, an approach has been made to share devices between the RTOS and the general-purpose OS by performing virtualization in the embedded apparatuses as well, using a VM (Virtual Machine) that has been developed for a main frame and a PC server.

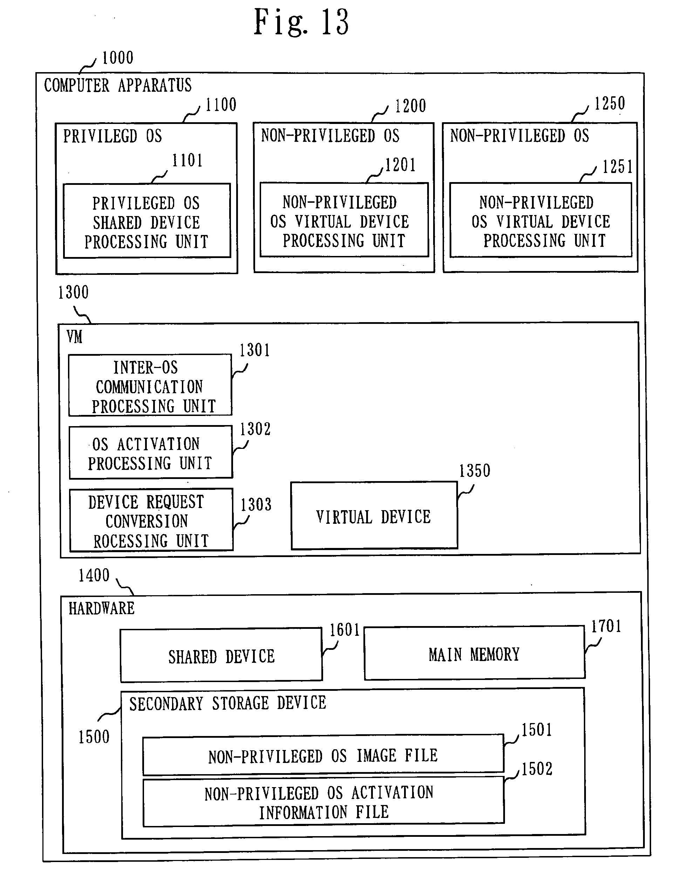

Fig. 13 shows a configuration of a computer apparatus 1000 including a conventional VM. The computer apparatus 1000 is an embedded apparatus, for example.

A privileged OS denotes an OS that has control rights of all devices on the apparatus.
Conversely, a non-privileged OS denotes an OS for which use of all of the devices on the apparatus is limited.
That is, referring to Fig. 13, a privileged OS 1100 is an OS having control rights of all the devices used on the computer apparatus 1000.
A non-privileged OS 1200 and a non-privileged OS 1250 are OSs for which access to the devices used on the computer apparatus 1000 is limited.
Details of each of the privileged OS 1100, the non-privileged OS 1200, and the non-privileged OS 1250 will be described below.

The privileged OS 1100 includes a privileged OS shared device processing unit 1101.
The privileged OS 1100 is an OS to which a privilege for using all the real devices that are present on the system is given.
Herein, a general-purpose OS such as Linux (registered trademark) having a wide variety of device processing functions for real devices is assumed as the privilege OS 1100.
The privileged OS shared device processing unit 1101 includes a function of receiving an IO request from the privilege OS 1100 and an IO request form an inter-OS communication processing unit 1301 on a VM 1300 and then transmitting each of the IO requests to a shared device 1601.
The IO request is a request to use the shared device 1601.

The non-privileged OS 1200 includes a non-privileged OS virtual device processing unit 1201.
The non-privileged OS 1200 is an OS for which access to the real devices is limited.
Herein, a real time OS is assumed, as the non-privileged OS 1200.
The non-privileged OS virtual device processing unit 1201 includes a function of transmitting an IO request to a virtual device 1350 on the VM 1300.

The non-privileged OS 1250 includes a non-privileged OS virtual device processing unit 1251.
The non-privileged OS 1250 is an OS for which access to the real devices is limited.
Herein, a general-purpose OS is assumed, as the non-privileged OS 1250.
The non-privileged OS virtual device processing unit 1251 includes a function of transmitting an IO request to the virtual device 1350 on the VM 1300.

Hardware 1400 is constituted by devices to be used in the computer apparatus 1.
The hardware 1400 includes a secondary storage device 1500, the shared device 1601, and a main memory 1701.
The main memory 1701 is a region to which an OS image held on the secondary storage device is loaded when each OS is activated.
The secondary storage device 1500 holds a non-privileged OS image file 1501 and a non-privileged OS activation information file 1502 which are files for activating each non-privileged OS.
The non-privileged OS image file 1501 is a binary file to be used when each of the non-privileged OSs is activated.
Information necessary for activating each of the non-privileged OSs is written in the non-privileged OS activation information file 1502.
The non-privileged OS activation information file 1502 includes a memory size, a page size, the number of CPUs, the number of timers, the name of the OS, an entry address, and the like that are necessary.
The shared device 1601 is a device such as a network device, a graphic device, a keyboard, a serial interface, a mouse, an infrared interface, or a USB (Universal Serial Bus) port that can be shared between the RTOS and the general-purpose OS.
The non-privileged OS image file 1501 and the non-privileged OS activation information file 1502 are provided for each non-privileged OS.
In the example in Fig. 13, the non-privileged OS image file 1501 and the non-privileged OS activation information file 1502 are provided for the non-privileged OS 1200, and the non-privileged OS image file 1501 and the non-privileged OS activation information file 1502 are provided for the non-privileged OS 1250.

The VM 1300 is a VM including the virtual device and a function of communication between the OSs.
The VM 1300 includes the inter-OS communication processing unit 1301, an OS activation processing unit 1302, a device request conversion processing unit 1303, and the virtual device 1350.
The inter-OS communication processing unit 1301 includes a function of transmitting an IO request from the non-privileged OS 1200 or the non-privileged OS 1250 to the privileged OS 1100.
The OS activation processing unit 1302 includes a function of activating each of the non-privileged OS 1200 and the non-privileged OS 1250 according to an instruction of the privileged OS 1100.
The device request conversion processing unit 1303 includes a function of converting an IO request for the virtual device 1350 from the non-privileged OS 1200 or the non-privileged OS 1250 to an IO request for the shared device 1601.
The virtual device 1350 emulates the shared device 1601 for the non-privileged OS 1200 and the non-privileged OS 1250.
That is, the virtual device 1350 includes a function of receiving an IO request from the non-privileged OS 1200 or the non-privileged OS 1250, converting the IO request to the IO request for the shared device 1601, using the device request conversion processing unit 1303, and transmitting the converted IO request to the privilege OS 1100 through the inter-OS communication processing unit 1301.

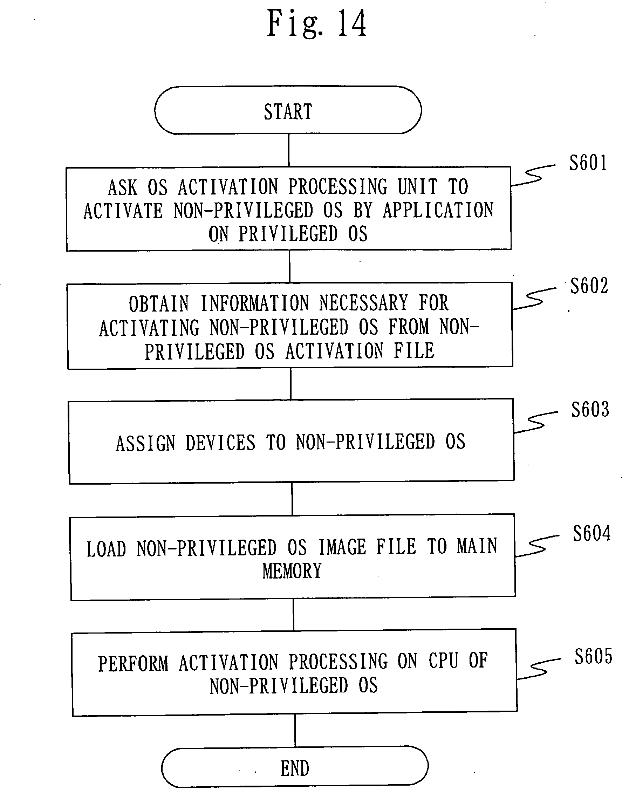

Next, a description will be given about a procedure by which an application program (hereinafter referred to just as an application) on the privileged OS 1100 activates the non-privileged OS 1200 in a related art, using Fig. 14.

First, the application on the privileged OS 1100 requests activation of the non-privileged OS 1200 to the OS activation processing unit 1302 on the VM 300, in step S601.
In that case, the application on the privileged OS 1100 specifies the non-privileged OS image file 1501 and the non-privileged OS activation information file 1502 for the non-privileged OS 1200 that are present on the secondary storage device 1500.
Next, the OS activation processing unit 1302 on the VM 300 obtains the memory size, the page size, the number of CPUs, the number of timers, the name of the OS, and the entry address necessary for activating the OS, from the non-privileged OS activation information file 1502, in step S602.
Next, after obtaining the information on the devices necessary for activating the OS, the OS activation processing unit 1302 on the VM 1300 assigns the devices to the non-privileged OS 1200, in step S603.
The devices to be assigned are the memory, the CPU, and the timer.
Next, the OS activation processing unit 1302 on the VM 1300 loads the non-privileged OS image file 1501 to the main memory 1701, in step S604.
Next, the OS activation processing unit 1302 on the VM 1300 performs activation processing on the CPU of the non-privileged OS 1200, in step S605.
This activation processing corresponds to specifying the entry address obtained in step S602 for a reset vector of the CPU assigned to the non-privileged OS 1200 and transmitting a hardware reset to the CPU, for example.
With the above-mentioned operations, activation of the non-privileged OS 1200 by the application on the privileged OS 1100 is completed.

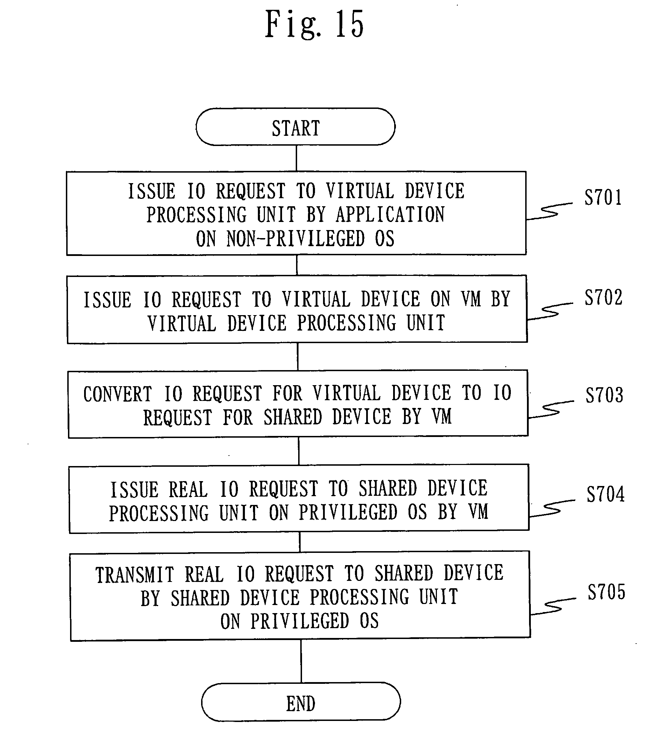

Next, a procedure for device sharing using the VM 1300 in the related art will be described, using Fig. 15.

First, an application on the non-privileged OS 1250 issues an IO request to the non-privileged OS virtual device processing unit 1251, in step S701.
Next, the non-privileged OS virtual device processing unit 1251 on the non-privileged OS 1250 issues an IO request to the virtual device 1350 on the VM 1300 through the inter-OS communication processing unit 1301 on the VM 1300, in step S702.
Next, the VM 1300 invokes the device request conversion processing unit 1303 with respect to the IO request for the virtual device 1350 to convert the IO request for the virtual device 1350 to the IO request for the shared device 1601, in step S703.
Next, the VM 1300 issues a real IO request to the privileged OS shared device processing unit 1101 on the privilege OS 1100 through the inter-OS communication processing unit 1301, in step S704.
Next, the privileged OS shared device processing unit 1101 on the privileged OS 1100 transmits the real IO request to the shared device 1601, in step S705.
With the above-mentioned operations, device sharing is performed.

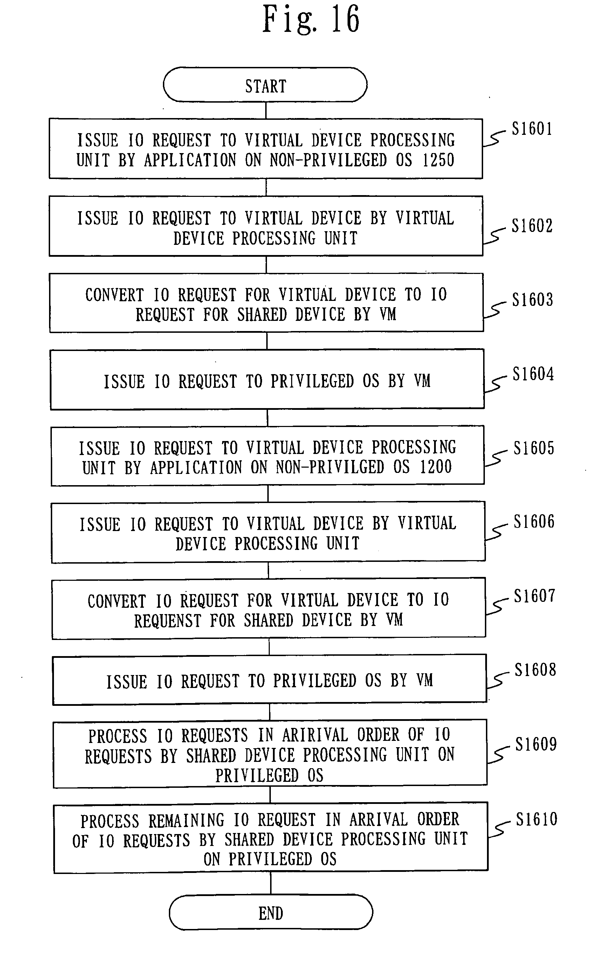

Next, a description will be directed to a process by the VM 1300 when contention occurs between an IO request from the non-privileged OS 1250 and an IO request from the non-privileged OS 1200 in the related art, using Fig. 16.

First, an application on the non-privileged OS 1250 issues an IO request to the non-privileged OS virtual device processing unit 1251, in step S1601.
Next, the non-privileged OS virtual device processing unit 1251 on the non-privileged OS 1250 issues an IO request to the virtual device 1350 on the VM 1300 through the inter-OS communication processing unit 1301 on the VM 1300, in step S1602.
Next, the VM 1300 invokes the device request conversion processing unit 1303 with respect to the IO request for the virtual device 1350 to convert the IO request for the virtual device 1350 to the IO request for the shared device 1601, in step S1603.
Next, the VM 1300 issues a real IO request to the privileged OS shared device processing unit 1101 on the privileged OS 1100 through the inter-OS communication processing unit 1301, in step S1604.
Then, an application on the non-privileged OS 1200 issues an IO request to the non-privileged OS virtual device processing unit 1201, in step S1605.
Upon receipt of this request, the non-privileged OS virtual device processing unit 1201 on the non-privileged OS 1200 issues an IO request to the virtual device 1350 on the VM 1300 through the inter-OS communication processing unit 1301 on the VM 1300, in step S1606.
Next, the VM 1300 invokes the device request conversion processing unit 1303 with respect to the IO request for the virtual device 1350 to convert the IO request for the virtual device 1350 to an IO request for the shared device 1601, in step S1607.
Next, the VM 1300 issues a real IO request to the privileged OS shared device processing unit 1101 on the privileged OS 1100 through the inter-OS communication processing unit 1301, in step S1608.
Upon receipt of this request, the privileged OS shared device processing unit 1101 on the privileged OS 1100 processes the IO requests in the order in which the IO requests have reached the privileged OS shared device processing unit 1101, in step S1609.
In the case of Fig. 16, the privileged OS shared device processing unit 1101 processes the IO request from the non-privileged OS 1250 earlier.
Finally, the privileged OS shared device processing unit 1101 on the privileged OS 1100 processes the IO request from the non-privileged OS 1200, in step S1610.
As described above, when contention of IO requests occurs, the IO requests are processed in the order in which the IO requests have reached the privileged OS shared device processing unit 1101.

### Related Art Literature

### Patent Literature

Patent Literature 1: JP 62-78631 A

### Overview of Invention

### Problem to be Solved by Invention

In the configuration shown in Fig. 13, all IO requests from the non-privileged OS 1200 are processed by the privileged OS shared device processing unit 101 on the privileged OS 1100 through the virtual device 1350 on the VM 1300.
It is a common practice to use the general-purpose OS such as Linux (registered trademark) having a wide variety of device drivers, for the privileged OS 1100.
When the non-privileged OS 1200 is the RTOS in the configuration in Fig. 13, an IO request from the non-privileged OS 1200 is processed by the privileged OS shared device processing unit 1101 1 on the privileged OS 1100 that is the general-purpose OS. For this reason, there is a problem that real-time responsiveness demanded for the non-privileged OS 1200 cannot be maintained.
That is, the non-privileged OS 1200 cannot directly transmit an IO request to the shared device 1601. The IO request from the non-privileged OS 1200 is transmitted to the shared device 1601 through the processing of the VM 1300 and the privileged OS 1100 that is not the RTOS. Thus, the real-time responsiveness cannot be ensured.

As a first method of solving this problem, use of the RTOS for the privileged OS 1100 may be considered.
However, generally, the RTOS poorly handles devices. Thus, when the RTOS is used for the privileged OS 1100, there is a problem that it is necessary to add a device processing module to the RTOS for all the devices shared in the computer apparatus 1000.

As a second solution, a method of altering only the privileged OS shared device processing unit 1101 on the privileged OS 1100 to run on a real-time basis may also be considered.
However, generally, only a specific device processing unit that operates on the general-purpose OS cannot be altered to run on a real-time basis. Accordingly, an internal structure of the general-purpose OS needs to be modified, thereby altering the entire OS to run on a real-time basis.
In the example in Fig. 13, it is necessary to alter the entire privileged OS 1100 to run on a real-time basis.
In other words, there is a problem that the entire general-purpose OS must be altered to run on a real-time basis so as to ensure real-time responsiveness for the shared device.

One of main objects of the present invention is to solve these problems, and is therefore to efficiently share a device between a plurality of OSs while satisfying real-time responsiveness demanded by a non-privileged OS.

### Means for Solution to Problem

A computer apparatus according to the present invention is a computer apparatus to which one or more devices are connected.
The computer apparatus may include:
a privileged OS (Operating System) to which a control right of each of the one or more devices is given;
one or more non-privileged OSs to which no control right of any device is given;
an information storage unit that stores specified device information indicating a non-privileged OS and a specified device specified for the non-privileged OS; and
a control right administration unit that refers to the specified device information when one of the non-privileged OSs is activated after activation of the privileged OS, and, if the non-privileged OS to be activated has the specified device, transfers the control right of the specified device for the non-privileged OS to be activated from the privileged OS to the non-privileged OS to be activated.

### Advantageous Effects of Invention

According to the present invention, a particular device is associated with a non-privileged OS as a specified device, then, when the non-privileged OS is activated, the control right of the specified device is transferred from the privileged OS to the non-privileged OS. Accordingly, the non-privileged OS may directly issue a use request to the specified device. Real-time responsiveness necessary for the non-privileged OS may be ensured without the need for waiting for the process of the privileged OS.

### Brief Description of Drawings

[Fig. 1] is a diagram showing a configuration example of a computer apparatus according to a first embodiment;
[Fig. 2] is a diagram showing an example of a device control right table according to the first embodiment;
[Fig. 3] is a diagram showing an example of the device control right table according to the first embodiment;
[Fig. 4] is a table showing an example of a non-privileged OS activation information file according to the first embodiment;
[Fig. 5] is a diagram showing an example of a non-privileged OS device activation information file according to the first embodiment;
[Fig. 6] is a diagram showing a configuration example of the computer apparatus according to the first embodiment;
[Fig. 7] is a flowchart diagram showing an example of a procedure for activating a non-privileged OS according to the first embodiment;
[Fig. 8] is a flowchart diagram showing an example of a procedure for outputting an IO request and a procedure for receiving an IO request according to the first embodiment;
[Fig. 9] is a flowchart diagram showing an example of a procedure for outputting an IO request and a procedure for receiving an IO request according to the first embodiment;
[Fig. 10] is a flowchart diagram showing an example of a procedure for outputting an IO request and a procedure for receiving an IO request according to the first embodiment;
[Fig. 11] is a flowchart diagram showing an example of a procedure for outputting an IO request and a procedure for receiving an IO request according to a second embodiment;
[Fig. 12] is a diagram showing a hardware configuration example of the computer apparatus according to the first and second embodiments and a third embodiment;
[Fig. 13] is a diagram showing a configuration example of a conventional computer apparatus;
[Fig. 14] is a flowchart diagram showing an example of a conventional procedure for activating a non-privileged OS;
[Fig. 15] is a flowchart diagram showing an example of a conventional procedure for outputting an IO request and a conventional procedure for receiving an IO request; and
[Fig. 16] is a flowchart diagram showing an example of a conventional procedure for outputting an IO request and a conventional procedure for receiving an IO request.

### Mode for Carrying Out the Invention

### First Embodiment.

In this embodiment, a description will be directed to a method of achieving device sharing while satisfying real-time responsiveness demanded by a non-privileged OS, by adding only a function for device sharing to the non-privileged OS.
More specifically, in this embodiment, a particular shared device, as a specified device, is associated with the non-privileged OS not having a shared device control right. The control right of the specified device is given to the privileged OS until the non-privileged OS is activated. When the non-privileged OS is activated, the control right of the specified device is transferred from the privileged OS to the non-privileged OS.
The specified device is a shared device with a high frequency of use by the non-privileged OS, for example.
This transfer of the control right allows the non-privileged OS to directly issue an IO request to the specified device. The need for waiting for processes by a virtual machine and the privileged OS is eliminated, so that the real-time responsiveness necessary for the non-privileged OS may be ensured.
The specified device after transfer of the control right to the non-privileged OS is also referred to as a device under control.
The IO request is a request to use the shared device.

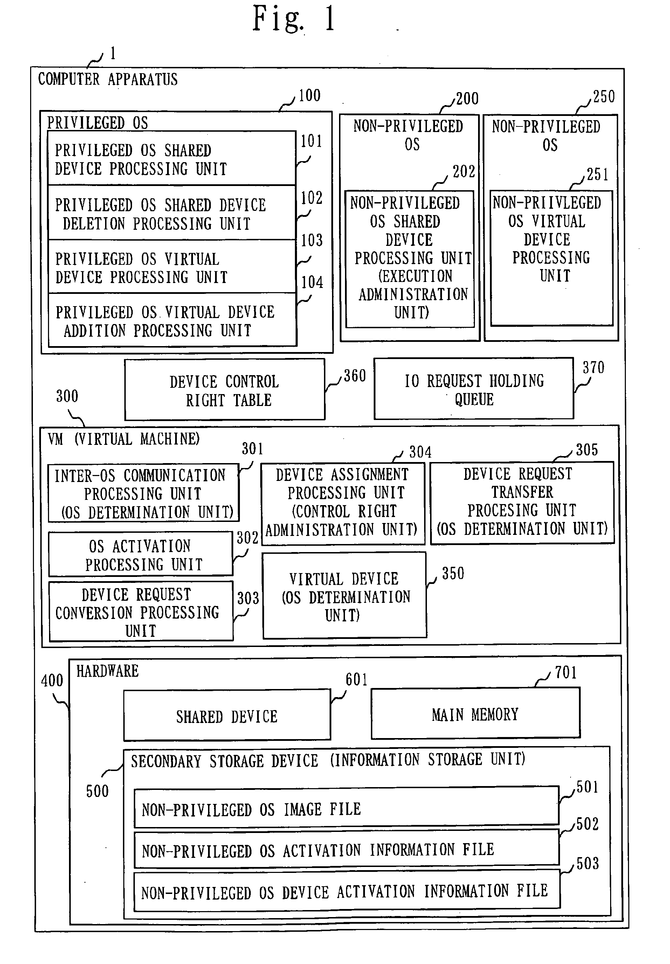

Fig. 1 shows a configuration example of a computer apparatus 1 according to this embodiment.
The computer apparatus 1 is an embedded apparatus, for example.

Hardware 400 is constituted by devices to be used in the computer apparatus 1.
A VM 300 is a VM including a virtual device and a function of communication between OSs.
A privileged OS 100 is an OS having control rights of all the devices used on the computer apparatus 1.
A non-privileged OS 200 and a non-privileged OS 250 are OSs for which access to the devices is limited.

First, the hardware 400 will be described.
The hardware 400 includes a secondary storage device 500, a shared device 601, and a main memory 701.

The main memory 701 is a region to which an OS image held on the secondary storage device 500 is loaded when each OS is activated.
The shared device 601 is a device such as a network device, a graphic device, a keyboard, a serial interface, a mouse, an infrared interface, or a USB (Universal Serial Bus) port, which can be shared between a real time OS (RTOS) and a general-purpose OS.
There may be a plurality of the shared devices 601 in the hardware.
An IO request for the shared device 601 is a request to use the shared device 1601.

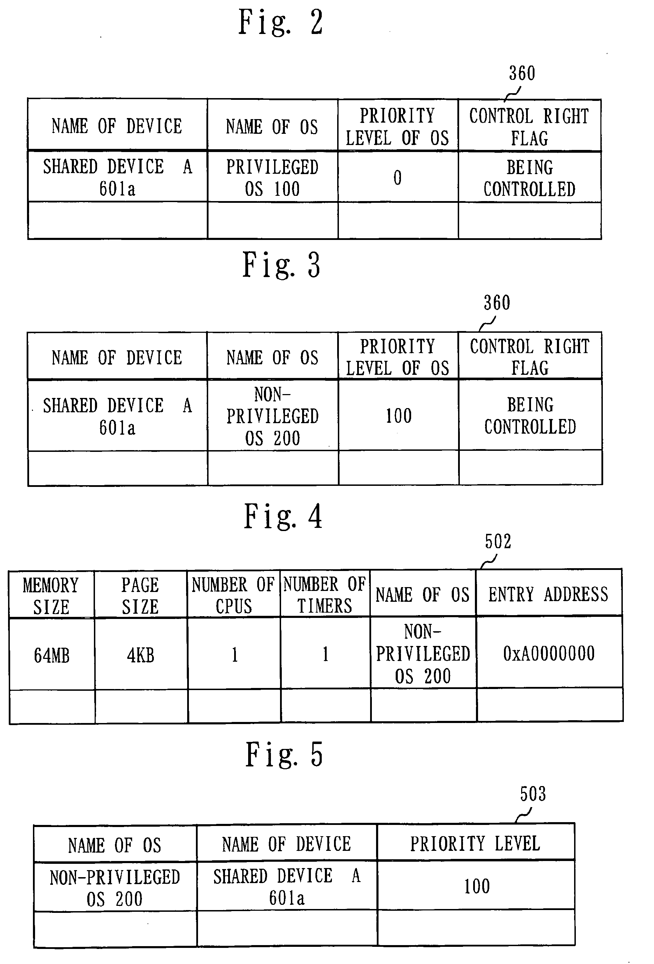

The secondary storage device 500 includes a non-privileged OS image file 501 and a non-privileged OS activation information file 502 to be used for activating each of the non-privileged OS 200 and the non-privileged OS 250. The secondary storage device 500 is an example of an information storage unit.
The non-privileged OS image file 501 is a binary file to be used when an OS is started.
Information necessary for activating an OS is described in the non-privileged OS activation information file 502. A memory size, a page size, the number of CPUs, the number of timers, the name of the OS, an entry address, and the like that are necessary may be included as contents of the information. An example of the non-OS activation information file 502 is shown in Fig. 4.
The non-privileged OS image file 501 and the non-privileged OS activation information file 502 are provided for each non-privileged OS.
In the example in Fig. 1, the non-privileged OS image file 501 and the non-privileged OS activation information file 502 are provided for the non-privileged OS 200, and the non-privileged OS image file 501 and the non-privileged OS activation information file 502 are provided for the non-privileged OS 250.
The secondary storage device 500 further includes a non-privileged OS device activation information file 503.
The non-privileged OS device activation information file 503 describes the non-privileged OS, a device (specified device) specified for the non-privileged OS, and a priority level of the non-privileged OS.
The non-privileged OS device activation information file 503 is an example of specified device information, and the secondary storage device 500 is an example of the information storage unit.
The non-privileged OS device activation information file 503 is information shown in Fig. 5, for example.
The non-privileged OS device activation information file 503 is not provided for each non-privileged OS. The non-privileged OS device activation information file 503 may be provided for only one non-privileged OS.

### Next, the VM 300 (virtual machine) will be described.

The VM 300 includes a device assignment processing unit 304 and a device request transfer processing unit 305, in addition to an inter-OS communication processing unit 301, an OS activation processing unit 302, a device request conversion processing unit 303, and a virtual device 350.

The inter-OS communication processing unit 301 includes a function of transmitting an IO request from the non-privileged OS 200 to the privileged OS 100.

The OS activation processing unit 302 includes a function of activating the non-privileged OS 200 and the non-privileged OS 250 according to an instruction of the privileged OS 100.

The device request conversion processing unit 303 includes a function of converting an IO request for the virtual device 350 from the non-privileged OS to an IO request for the shared device 601.

The virtual device 350 emulates the shared device 601 for the non-privileged OS 200 and the non-privileged OS 250.
The number of the virtual devices 350 is equal to the number of the shared devices 601.
That is, the virtual device 350 receives an IO request from each of the non-privileged OS 200 and the non-privileged OS 250, converts the IO request to an IO request for the shared device 601, using the device request conversion processing unit 303, and asks the device request transfer processing unit 305 to process the IO request.

The device assignment processing unit 304 receives from the OS activation processing unit 302 on the VM 300 a device assignment request for the non-privileged OS, and assigns the shared device to the non-privileged OS.
To take an example, the device assignment processing unit 304 receives from the OS activation processing unit 302 on the VM 300 the device assignment request for the non-privileged OS 200, reads the non-privileged OS device activation information file 503 of the non-privileged OS 200 on the secondary storage device 500, and assigns the shared device 601 to the non-privileged OS 200.

The device request transfer processing unit 305 identifies the OS having the control right of the shared device 601 from a device control right table 360, and then transfers the IO request to the corresponding OS.

The VM 300 manages the device control right table 360.
The device control right table 360 is a table indicating which OS currently has the control right of which shared device. The device control right table 360 is an example of device control right information.
That is, the device control right table 360 is a table indicating which OS has the control right, for each shared device 601.
The device control right table 360 is the example of the device control right information.
The device control right table 360 is information shown in Fig. 2, for example.

The device assignment processing unit 304 on the VM 300 refers to the non-privileged OS device activation information file 503 when one of the non-privileged OSs is activated after activation of the privileged OS 100. When the non-privileged OS to be activated has the specified device, the device assignment processing unit 304 transfers the control right of the specified device of the non-privileged OS to be activated from the privileged OS 100 to the non-privileged OS to be activated.
The inter-OS communication processing unit 301, the device request transfer processing unit 305, and the virtual device 350 cooperate in inputting an IO request (use request) for one of the shared devices 601 output from one of the OSs, referring to the device control right table 360, determining the OS having the control right of the shared device 601 targeted by the received IO request, and outputting the IO request to the determined OS.
The inter-OS communication processing unit 301, the device request transfer processing unit 305, and the virtual device 350 implement a function of an OS determination unit.

Next, the privileged OS 100 will be described.
The privileged OS 100 includes a privileged OS shared device deletion processing unit 102, a privileged OS virtual device processing unit 103, and a privileged OS virtual device addition processing unit 104, in addition to a privileged OS shared device processing unit 101.
The privileged OS 100 is an OS to which a privilege for using all real devices that are present on the system is given.
That is, control rights of all the shared devices 601 are given to the privileged OS 100 in an initial state.
A general-purpose OS such as Linux (registered trademark) having a wide variety of device processing modules for real devices is assumed as the privilege OS 100.

The privileged OS shared device processing unit 101 includes a function of receiving an IO request from the privilege OS 100 and an IO request from the inter-OS communication processing unit 301 on the VM 300 and then transmitting each of the IO requests to the shared device 601.
The privileged OS shared device deletion processing unit 102 performs processing of separating the shared device 601 whose control right is assigned to the privileged OS 100 from the privileged OS 100 according to an instruction from the VM 300.
The privileged OS virtual device processing unit 103 issues an IO request to the virtual device 350 on the VM 300.
The privileged OS virtual device addition processing unit 104 performs processing of assigning the virtual device 350 on the VM 300 to the privileged OS 100, according to an instruction from the VM 300.

Next, the non-privileged OS 200 will be described.
The non-privileged OS 200 includes a non-privileged OS shared device processing unit 202.
A real-time OS is assumed as the non-privileged OS 200.
In this embodiment, a description will be given about an example where the non-privileged OS 200 has the specified device and the non-privileged OS 250 has no specified device.
That is, the non-privileged OS 200 is listed in the non-privileged OS device activation information file 503, the specified device is specified for the non-privileged OS 200, and the control right of the specified device is given to the non-privileged OS 200.
On the other hand, the non-privileged OS 250 is not listed in the non-privileged OS device activation information file 503, and the specified device is not specified for the non-privileged OS 250.
Hereinafter, a description will be given, assuming that the specified device of the non-privileged OS 200 is a shared device A601 a.

The non-privileged OS shared device processing unit 202 manages an IO request holding queue 370. The non-privileged OS shared device processing unit 202 includes a function of, when contention of IO requests occurs, transmitting an IO request to the shared device 601 on the hardware 400 according to priority levels of the OSs that have transmitted the IO requests.
The non-privileged OS shared device processing unit 202 operates as an execution administration unit in a second embodiment.
The IO request holding queue 370 includes a function of temporarily holding IO requests from the device request transfer processing unit 305 on the VM 300 and the non-privileged OS 200, which is the OS itself.
The non-privileged OS shared device processing unit 202 changes the order of the queue, according to the priority levels of the OSs that have transmitted the IO requests.
The priority level in the non-privileged OS device activation information file 503 for the shared device 601 is used as the priority level of the OS that has transmitted the IO request.
If the non-privileged OS device activation information file 503 is not present, the lowest priority level is used.

Next, the non-privileged OS 250 will be described.
The non-privileged OS 250 is an OS for which access to the real devices is limited.
As the non-privileged OS 250, a general-purpose OS is assumed.
The non-privileged OS 250 includes a non-privileged OS virtual device processing unit 251.
The non-privileged OS virtual device processing unit 251 includes a function of transmitting an IO request to the virtual device 350 on the VM 300.

As mentioned before, the non-privileged OS 200 has the specified device, and the non-privileged OS 250 has no specified device in this embodiment. Accordingly, the non-privileged OS shared device processing unit 202 is present in the non-privileged OS 200, but the non-privileged OS 250 includes no element corresponding to the non-privileged OS shared device processing unit 202.
Instead, the non-privileged OS virtual device processing unit 251 for transmitting an IO request for the shared device 601 to the virtual device 350 is provided for the non-privileged OS 250.

Fig. 2 shows an example of contents of the device control right table 360 provided for the VM 300.
The device control right table 360 shows the OS having the control right, for each shared device.
The device control right table 360 includes table items of the name of each shared device, the name of the OS having the control right, the priority level of the OS having the control right, and a control right flag indicating a current control status.
The example in Fig. 2 shows that the privileged OS 100 is controlling the shared device A601a, and that the privileged OS 100 has the priority level of zero.

Fig. 5 shows an example of the non-privileged OS device activation information file 503.
The non-privileged OS device activation information file 503 includes table items of the name of the OS, the name of the shared device, and the priority level.
The example in Fig. 5 shows that the priority level of 100 for the shared device A601a is set, to the non-privileged OS 200.
It is assumed in this embodiment that the larger the value of the priority level is, the higher the priority level is.

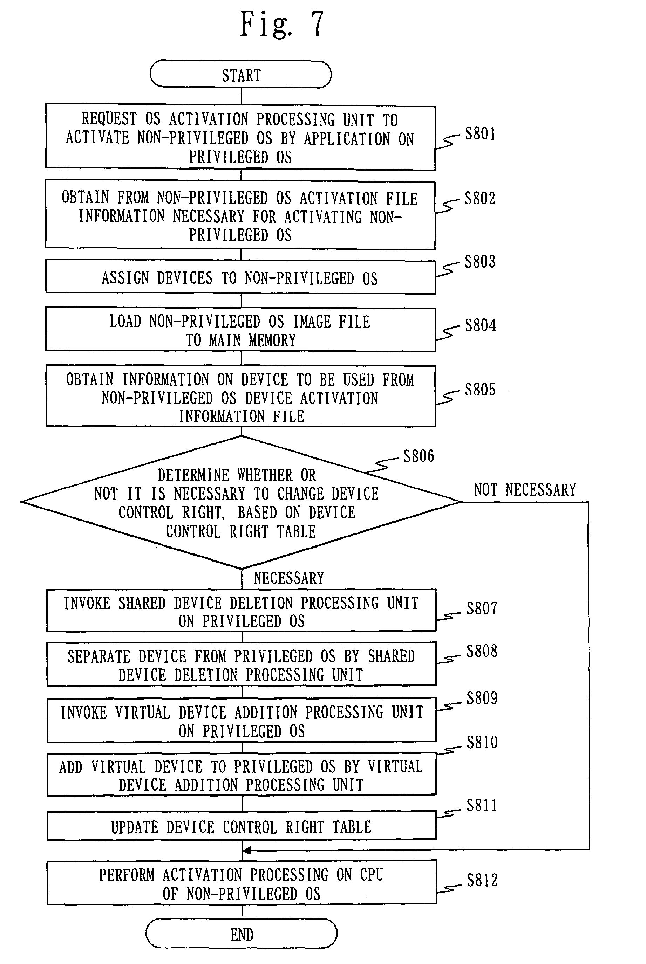

Next, a procedure for activating the non-privileged OS 200 by an application on the privileged OS 100 in this embodiment will be described, using Fig. 7.

First, in step S801, the privileged OS 100 requests the OS activation processing unit 302 on the VM 300 to activate the non-privileged OS 200.
In that case, the privileged OS 100 specifies the non-privileged OS image file 501, the non-privileged OS activation information file 502, and the non-privileged OS device activation information file 503 of the non-privileged OS 200 that are present on the secondary storage device 500.
Next, in step S802, the OS activation processing unit 302 on the VM 300 obtains the memory size, the page size, the number of the CPUs, the number of the timers, the name of the OS, and the entry address necessary for activating the non-privileged OS 200 from the non-privileged OS activation information file 502 (Fig. 4).
Next, in step S803, the OS activation processing unit 302 on the VM 300 assigns the devices to the non-privileged OS 200 after obtaining the information on the devices necessary for activating the non-privileged OS 200.
The devices to be assigned are the memory, the CPU and the timer.
Next, in step S804, the OS activation processing unit 302 on the VM 300 loads the non-privileged OS image file 501 to the main memory 701, and specifies the entry address in the program counter of the CPU assigned to the non-privileged OS 200.
Next, in step S805, the device assignment processing unit 304 on the VM 300 obtains the specified device for the non-privileged OS 200 and the priority level of the non-privileged OS 200 from the non-privileged OS device activation information file 503 (Fig. 5).
In Fig. 5, the specified device for the non-privileged OS 200 is the shared device A601a, and the priority level of 100 for the shared device A601a is set, to the non-privileged OS 200.

Next, in step S806, the device assignment processing unit 304 on the VM 300 determines the OS having the control right of the specified device and also determines whether or not it is necessary to change the control right of the device, based on the device control right table 360 (Fig. 2), using the specified device (shared device A60 1 a) for the non-privileged OS 200 being activated and obtained in step S805 as a key.
The example shown in Fig. 2 indicates that the OS currently having the control right of the shared device A601a is the privileged OS 100 and that the priority level of the privileged OS 100 is zero.
On the other hand, as shown in Fig. 5, the priority level of the non-privileged OS 200 currently being activated for the shared device A601a is 100. The non-privileged OS 200 has the priority level higher than the privileged OS 100.
Thus, the device assignment processing unit 304 determines assignment of the control right of the shared device A601a to the non-privileged OS 200, and determines that it is necessary to change the control right.
When the control right needs to be changed, the process transitions to step S807. When the control right does not need to be changed, the process transitions to step S812.

The device assignment processing unit 304 on the VM 300 invokes the privileged OS shared device deletion processing unit 102 on the privileged OS 100, in step S807.
Next, in step S808, the privileged OS shared device deletion processing unit 102 on the privileged OS 100 separates the shared device A601a from the privileged OS 100 and notifies the separation to the device assignment processing unit 304 on the VM 300, with the operation of the privileged OS 100 continued.
Next, in step S809, the device assignment processing unit 304 on the VM 300 invokes the privileged OS virtual device addition processing unit 104 on the privileged OS 100.
Next, in step S810, the privileged OS virtual device addition processing unit 104 associates the privileged OS 100 with the virtual device 350 corresponding to the shared device A601a, and notifies the association to the device assignment processing unit 304 on the VM 300, with the operation of the privileged OS 100 continued.
Next, in step S811, the device assignment processing unit 304 on the VM 300 updates the device control right table 360.
In this example, the control right of the shared device A601a is transferred to the non-privileged OS 200 from the privileged OS 100.
Accordingly, the device control right table 360 shown in Fig. 2 is changed to that shown in Fig. 3.
Finally, the OS activation processing unit 302 on the VM 300 instructs the CPU of the non-privileged OS 200 to be activated, in step S812.
With the above-mentioned operations, activation of the non-privileged OS 200 is completed.

The above description is directed to the case where the control right of the shared device A601 a is transferred from the privileged OS 100 to the non-privileged OS 200. The control right of the shared device can also be transferred from the non-privileged OS to the different non-privileged OS.
Assume, for example, that the non-privileged OS 250 is activated after the control right of the shared device A60 1 a has been transferred to the non-privileged OS 200 by the above-mentioned procedure. When the priority level of the non-privileged OS 250 for the shared device A601 is 200, the priority level of the non-privileged OS 250 is higher. Thus, the control right of the shared device A601a is transferred to the non-privileged OS 250.

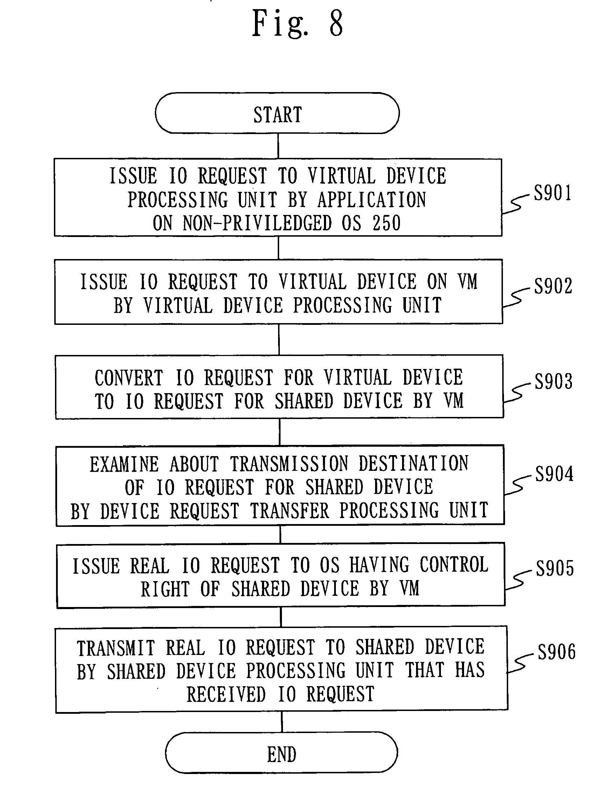

Next, a method of device sharing in this embodiment will be explained, using Fig. 8.
Herein, the explanation will be directed to a case where the non-privileged OS 250 uses the shared device A601 a.

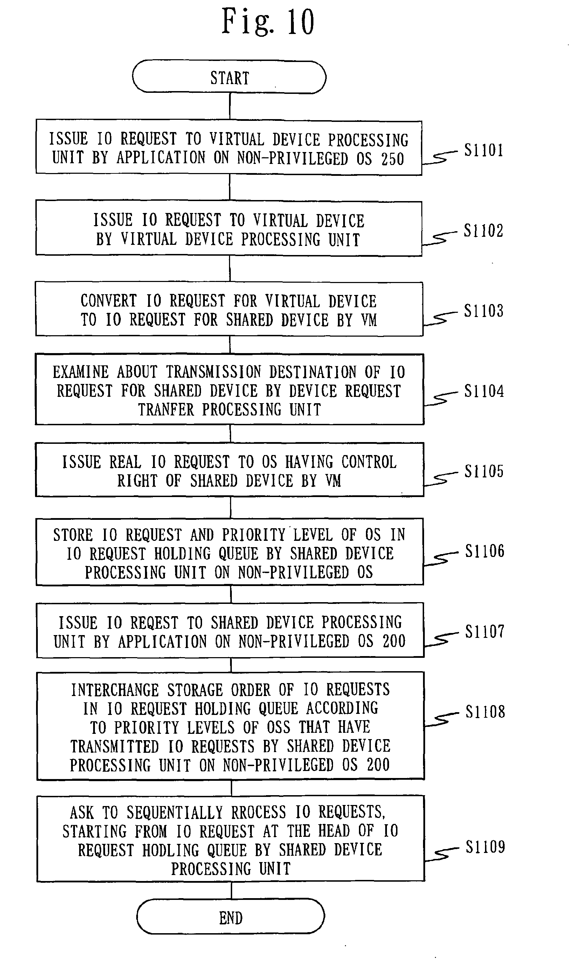

First, an application on the non-privileged OS 250 issues an IO request for the shared device A601 a to the non-privileged OS virtual device processing unit 251, in step S901.
Next, the non-privileged OS virtual device processing unit 251 on the non-privileged OS 250 issues an IO request to the virtual device 350 on the VM 300 corresponding to the shared device A60 1 a through the inter-OS communication processing unit 301 on the VM 300, in step S902.
Next, the virtual device 350 on the VM 300 invokes the device request conversion processing unit 303 with respect to the IO request for itself. In step S903, the device request conversion processing unit 303 converts the IO request for the virtual device 350 to the IO request for the shared device A601a, and then the virtual device 350 invokes the device request transfer processing unit 305 on the VM 300.
Next, in step S904, the device request transfer processing unit 305 on the VM 300 refers to the device control right table 360 to examine to which OS the shared device A601a is assigned, and notifies a result of the examination to the virtual device 350.
When the device control right table 360 is in the state shown in Fig. 3, the device request transfer processing unit 305 notifies that the control right of the shared device A601a is assigned to the non-privileged OS 200.
Next, in step S905, the virtual device 350 on the VM300 issues a real 1 request to the non-privileged OS shared device processing unit 202 on the OS having the control right of the shared device A601a, i.e., the non-privileged OS 200 through the inter-OS communication processing unit 301.
The non-privileged OS shared device processing unit 202 on the non-privileged OS 200 stores the real IO request (IO request of the non-privileged OS 250) from the virtual device 350 and the priority level of the non-privileged OS 250 in the IO request holding queue 370 and then examines whether or not there is a real IO request output from another OS (privileged OS 100 or the non-privileged OS 200).
Then, in step S906, the non-privileged OS shared device processing unit 202 on the non-privileged OS 200 transmits the real IO request to the shared device A601a, which is a device under control, after it has been confirmed that there is no real IO request from the another OS. Then, the application on the non-privileged OS 250 can use the shared device A601 a.
A process when the real IO request is output from the another OS will be described later with reference to Fig. 10.
Device sharing is implemented by the above-mentioned process.
The same processing procedure as in the case of the non-privileged OS 250 is used also when an application on the privileged OS 100 outputs an IO request for the shared device A601.

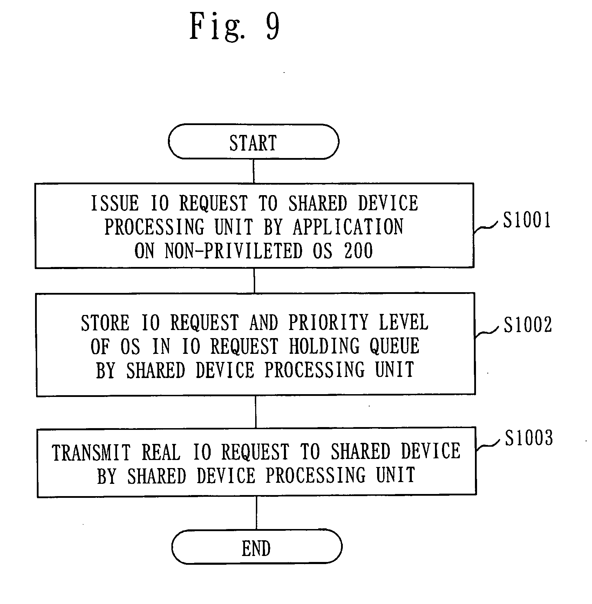

Next, a processing procedure when the non-privileged OS 200 uses the shared device A601a will be described using Fig. 9.

First, in step S1001, an application on the non-privileged OS 200 issues an IO request for the shared device A60 1 a to the non-privileged OS shared device processing unit 202. The non-privileged OS 200 recognizes that the control right of the shared device A601a belongs to the non-privileged OS 200.
Next, in step S1002, the non-privileged OS shared device processing unit 202 stores the IO request from the application on the non-privileged OS 200 and the priority level of the non-privileged OS 200 in the IO request holding queue 370 and then examines whether or not there is a real IO request output from another OS (privileged OS 100 or the non-privileged OS 250).
Then, in step S1003, the non-privileged OS shared device processing unit 202 transmits the real IO request to the shared device A601a after it has been confirmed that there is no real IO request from the another OS. Then, the application on the non-privileged OS 200 can use the shared device A601a.
A process when the real IO request is output from the another OS will be described later with reference to Fig. 10.
Device sharing is implemented by the above-mentioned process.

Next, a process when contention of IO requests from the non-privileged OS 200 and the non-privileged OS 250 occurs in this embodiment will be described, using Fig. 10.

First, in step S1101, an application on the non-privileged OS 250 issues an IO request for the shared device A601a to the non-privileged OS virtual device processing unit 251.
Next, in step S 1102, the non-privileged OS virtual device processing unit 251 on the non-privileged OS 250 issues an IO request to the virtual device 350 on the VM 300 corresponding to the shared device A601a through the inter-OS communication processing unit 301 on the VM 300.
Next, in step S1103, the virtual device 350 on the VM 300 invokes the device request conversion processing unit 303 with respect to the IO request for itself. The device request conversion processing unit 303 converts the IO request for the virtual device 350 to the IO request for the shared device A601 a, and then the virtual device 350 invokes the device request transfer processing unit 305 on the VM 300.
Next, the device request transfer processing unit 305 on the VM 300 refers to the device control right table 360 to examine to which OS the shared device A601a is assigned, and notifies a result of the examination to the virtual device 350, in step S1104.
When the device control right table 360 is in the state shown in Fig. 3, the device request transfer processing unit 305 notifies that the control right of the shared device A601 a is assigned to the non-privileged OS 200.
Next, in step S 1105, the virtual device 350 on the VM300 issues a real IO request to the non-privileged OS shared device processing unit 202 on the OS having the control right of the shared device A601a, i.e., the non-privileged OS 200 through the inter-OS communication processing unit 301.
Next, in step S 1106, the non-privileged OS shared device processing unit 202 on the non-privileged OS 200 stores the real IO request (IO request of the non-privileged OS 250) from the virtual device 350 and the priority level of the non-privileged OS 250 in the IO request holding queue 370 to examine whether or not there is a real IO request output from another OS (privileged OS 100 or the non-privileged OS 200).
Since no IO request from the another OS is present in the IO request holding queue 370 at this point, the IO request in step S1106 is stored at the head of the queue.
As the priority level of the OS to be stored in the IO request holding queue 370, the priority level for the shared device 601 in the non-privileged OS device activation information file 503 is used. When the non-privileged OS device activation information file 503 is not present, the lowest priority level is used.
In the case of this embodiment, the non-privileged OS device activation information file 503 for the non-privileged OS 250 is not present. Thus, the lowest priority level (0) is used. For the privileged OS 100, the lowest priority level (0) is used for all the shared devices 601.

It is assumed herein that an application on the non-privileged OS 200 issues an IO request for the shared device A601 a to the non-privileged OS shared device processing unit 202, in step S1107. The non-privileged OS 200 recognizes that the control right of the shared device A601 a belongs to the non-privileged OS 200.
The non-privileged OS shared device processing unit 202 on the non-privileged OS 200 stores the IO request from the application on the non-privileged OS 200 and the priority level of the non-privileged OS 200 in the IO request holding queue 370 and then examines whether or not there is a real IO request output from another OS (privileged OS 100 or the non-privileged OS 250).
In the example in Fig. 10, the IO request from the non-privileged OS 250 has already been stored in the IO request holding queue 370.
Thus, the non-privileged OS shared device processing unit 202 interchanges the IO requests within the IO request holding queue 379, based on the priority levels of the OSs.
More specifically, since the priority level of the non-privileged OS 250 for the shared device A601a is the lowest, and the priority level of the non-privileged OS 200 for the shared device A601a is 100, the priority level of the non-privileged OS 200 is higher than the priority level of the preceding non-privileged OS 250.
For that reason, the non-privileged OS shared device processing unit 202 on the non-privileged OS 200 changes the storage order of the IO request in the IO request holding queue 370 according to the priority levels of the OSs that have transmitted the IO requests, in step S 1108.
In other words, the non-privileged OS shared device processing unit 202 stores the IO request from the non-privileged OS 200 at the head of the IO request holding queue 370.
Finally, in step 1109, the non-privileged OS shared device processing unit 202 on the non-privileged OS 200 asks the shared device A601a, which is the device under control, to sequentially process the IO requests, starting from the IO request stored at the head of the IO request holding queue 370.
In the case of the example in Fig. 10, the shared device A601 a is asked to first process the IO request from the non-privileged OS 200. Then, the shared device A601a is asked to process the IO request from the non-privileged OS 250.

A processing procedure when the non-privileged OS 200 and the non-privileged OS 250 make IO requests to the shared device whose control right belongs to the privileged OS 100 is the same as that shown in Figs. 15 and 16. Thus, explanation is therefore omitted.

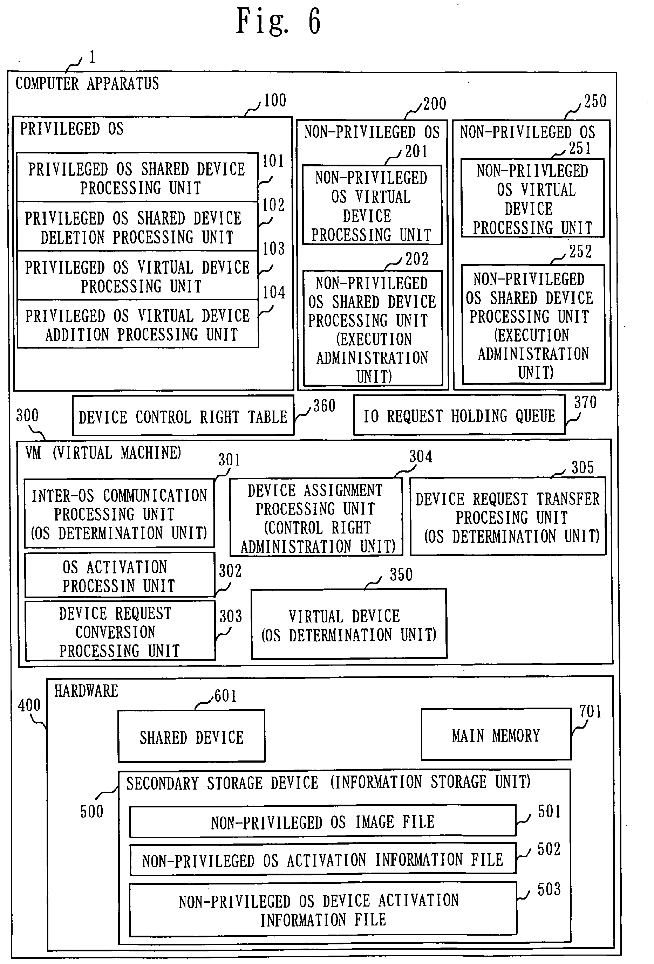

The above description is directed to the configuration (shown in Fig. 1) in which the shared device A601 a is the specified device of the non-privileged OS 200 , the non-privileged OS shared device processing unit 202 is provided for the non-privileged OS 200, and the non-privileged OS virtual device processing unit 251 is provided for the non-privileged OS 250.
It may also be so arranged, however, that the shared device A601 a is the specified device of the non-privileged OS 200, and a shared device B601b is a specified device of the non-privileged OS 250.
In this case, a non-privileged OS virtual device processing unit 201 and the non-privileged OS shared device processing unit 202 are provided for the non-privileged OS 200, and the non-privileged OS virtual device processing unit 251 and a non-privileged OS shared device processing unit 252 are provided for the non-privileged OS 250, as shown in Fig. 6.
When an application on the non-privileged OS 200 uses the shared device B 601b in the configuration in Fig. 6, the application outputs an IO request to the non-privileged OS virtual device processing unit 201. Then, the non-privileged OS virtual device processing unit 201 outputs to the virtual device 350 on the VM 300 an IO request for the shared device B601b.
The process on the VM 300 is as described before. An IO request for the shared device B601b is output to the non-privileged OS shared device processing unit 252 on the non-privileged OS 250 from the virtual device 350.
The process of the non-privileged OS shared device processing unit 252 itself is the same as that of the non-privileged OS shared device processing unit 202. Accordingly, explanation is omitted.

As described above, according to the device sharing system in this embodiment, the specific shared device is associated with the non-privileged OS as the specified device, and the control right of the specified device is transferred from the privileged OS to the non-privileged OS when the non-privileged OS is activated. Thus, the non-privileged OS can directly output to the specified device a request to use the specified device. Real-time responsiveness necessary for the non-privileged OS can be ensured without the need for waiting for the processes of the VM and the privileged OS.

The device sharing system in this embodiment includes a region for holding information on the hardware to be used by each non-privileged OS, a region for managing the OS which is a destination of an IO request, and a region for holding the IO request and the priority level of the OS which is a source of the IO request. When the non-privileged OS is activated, the device is assigned to the non-privileged OS. Further, an IO request from a different OS is transmitted to the non-privileged OS having the control right of the device. When contention of the IO requests occurs, the IO requests are executed according to the priority levels of the OSs that are sources of the IO requests.
Therefore, even if contention of the IO requests for the shared device occurs, real-time responsiveness of the OS having the control right of the shared device can be ensured.

In this embodiment, the description is directed to the computer apparatus including,
(1) the virtual machine (VM) that enables a plurality of the devices to be shared;
(2) one OS (privileged OS) capable of operating all the devices on the system;
(3) the plurality of OSs (non-privileged OS) each capable of operating a certain device on the system;
(4) the secondary storage device holding various data;
(5) the CPU and the memory that are hardware resource; and
(6) the virtual device on the VM for each shared device; and following components:
   (A) the device control right table showing the priority levels of the OSs for each shared device and the control state of each shared device;
   (B) the non-privileged OS device activation information file describing the shared device to be used by at least one of the non-privileged OSs and the priority level of the at least one of the non-privileged OSs;
   (C) the device assignment processing unit that assigns the device to be used by the non-privileged OS that will be activated, when the non-privileged OS is activated;
   (D) the device request transfer processing unit that determines to which OS the shared device is assigned and transfers an IO request to the corresponding OS;
   (E) the IO request holding queue in which the priority level of the OS that is a source of the IO request and the IO request are stored;
   (F) the shared device processing unit that asks the shared device to process the IO request based on the priority level of the OS that is the source of the IO request.

In this embodiment, the description is directed to the computer apparatus in which the device assignment processing unit obtains the device to be used by the non-privileged OS and the priority level of the non-privileged OS for the device from the non-privileged OS device activation information file when the non-privileged OS is activated. The device assignment processing unit identifies the OS currently having the control right of the device and the priority level of the OS from the device control right table, separates the device from the OS being currently used according to the priority level, assigns the device to the non-privileged OS being activated, delegates the control right of the device to the non-privileged OS, and performs updating of the device control right table including the transfer of the control right.

In this embodiment, the description is directed to the computer apparatus that enables device sharing between the OSs. In this apparatus, the device request transfer processing unit on the VM checks to which OS the shared device is assigned, using the device control right table. Then, the device request transfer processing unit makes a real IO request to the non-privileged OS shared device processing unit on the non-privileged OS through the inter-OS communication processing unit on the VM, thereby enabling device sharing between the OSs.

In this embodiment, the description is directed to the computer apparatus in which an IO request of the non-privileged OS having the control right of the shared device is preferentially executed, even if contention of IO requests for the shared device from a plurality of the OSs occurs. In this apparatus, according to the priority levels of the OSs that are sources of the IO requests, the shared device processing unit stores the IO requests in the IO request holding queue in the order of the priority levels of the OSs. When contention of the IO requests for the shared device from the plurality of OSs occurs, the IO request is executed, starting from the one at the head of the IO request holding queue. The IO request of the non-privileged OS having the control right of the shared device is thereby preferentially executed.

### Second Embodiment.

Next, a computer apparatus according to a second embodiment will be described.
The computer apparatus in this embodiment has the same configuration as that in Fig. 1 or 6.
This embodiment is the same as the first embodiment except operations of the non-privileged OS shared device processing unit 202 and the shared device 601.
In this embodiment, the non-privileged OS shared device processing unit 202 operates as an example of the execution administration unit.
In the configuration shown in Fig. 6, the non-privileged OS shared device processing unit 252 also operates as an example of the execution administration unit.
Explanation will be given based on the configuration in Fig. 1.

In this embodiment, the shared device 601 cancels execution of an IO request being executed, according to an instruction from the non-privileged OS shared device processing unit 202.

In this embodiment, during execution of an IO request issued from an OS by the shared device A601 a, an IO request for the shared device A60 1 a is issued from a different OS, then, the non-privileged OS shared device processing unit 202 compares the priority level of the OS that has newly issued the IO request for the shared device A60 1 a with the priority level of the OS that has issued the IO request for the shared device A601a being executed.
When the priority level of the OS that has newly issued the IO request is higher, the non-privileged shared device processing unit 202 gets execution of the IO request being executed stopped, and gets execution of the newly issued IO request started.

More specifically, when the non-privileged OS shared device processing unit 202 of the non-privileged OS 200 in this embodiment receives an IO request from each of the VM 300 and the non-privileged OS 200, the non-privileged OS shared device processing unit 202 first stores in the IO request holding queue 370 the IO request and the priority level of the OS that has transmitted the IO request.
Then, the non-privileged OS shared device processing unit 202 checks whether or not the shared device A60 1 a is processing an IO request issued previously from a different OS. When the shared device A601a is not processing, the non-privileged OS shared device processing unit 202 asks the shared device A601 a to execute the IO request.
When the shared device A601a is already processing the IO request from the different OS, the non-privileged OS shared device processing unit 202 compares the priority level of the OS that has made the IO request being executed by the shared device A601a with the priority level of the OS that has made the newly received IO request.
When the priority level of the OS that has made the newly received IO request is higher, the non-privileged OS shared device processing unit 202 instructs the shared device A601 a to cancel the IO request being currently executed and to execute the IO request of the higher priority level.
Further, the non-privileged OS shared device processing unit 202 deletes the canceled IO request from the IO request holding queue 370, and saves the canceled IO request in a predetermined save region.
Next, after execution of the IO request of the higher priority level has been finished, the non-privileged OS shared device processing unit 202 stores in the IO request holding queue 370 the IO request in the save region again, and then asks the shared device A601a to execute the cancelled IO request.

A procedure for activating the non-privileged OS 200 by an application on the privileged OS 100 in this embodiment is the same as that in shown in Fig. 7. Thus, explanation is omitted.
A device sharing method in this embodiment is the same as those in Figs. 8 and 9. Thus, explanation is omitted.

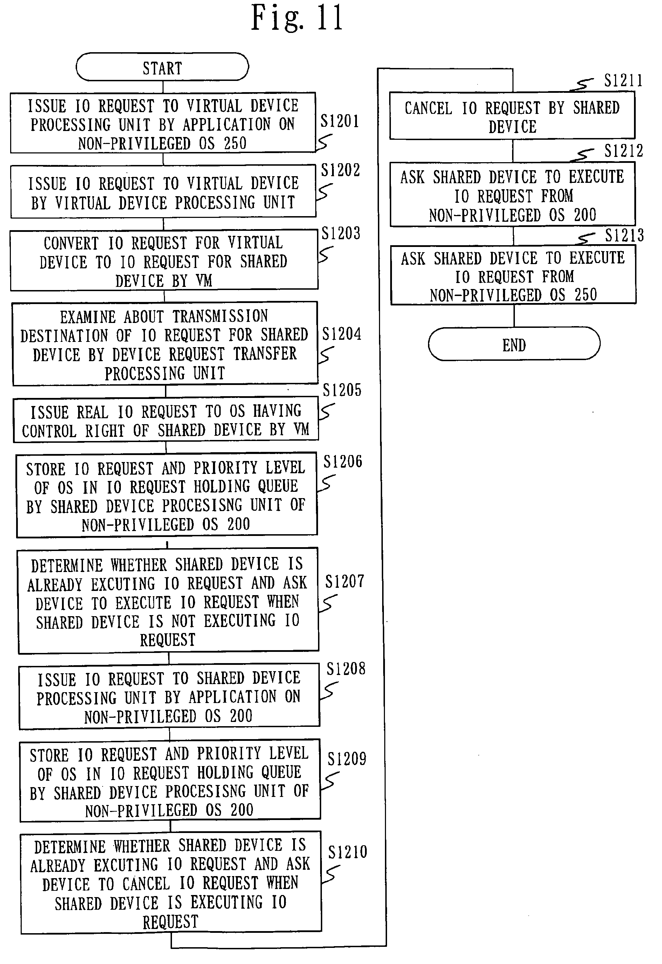

Next, a process in this embodiment when contention of IO requests from the non-privileged OS 200 and the non-privileged OS 250 occurs will be shown, using Fig. 11.
Steps S1201 to S1206 are the same as steps S1101 to S 1106 in Fig. 10.
Step S1208 is the same as step S 1107 in Fig. 10.
A description will be given below about steps S1201 to S1213 including duplicate portions of the steps in Fig. 10.

First, in step S1201, an application on the non-privileged OS 250 issues an IO request for the shared device A601a to the non-privileged OS virtual device processing unit 251.
Next, in step S1202, the non-privileged OS virtual device processing unit 251 on the non-privileged OS 250 issues an IO request to the virtual device 350 on the VM 300 corresponding to the shared device A601a through the inter-OS communication processing unit 301 on the VM 300.
Next, in step S1203, the virtual device 350 on the VM 300 invokes the device request conversion processing unit 303 with respect to the IO request for itself. The device request conversion processing unit 303 converts the IO request for the virtual device 350 to the IO request for the shared device A601a. Next, the virtual device 350 invokes the device request transfer processing unit 305 on the VM 300.
Next, in step S1204, the device request transfer processing unit 305 on the VM 300 refers to the device control right table 360 to examine to which OS the shared device A601a is assigned, and the notifies a result of the examination to the virtual device 350.
When the device control right table 360 is in the state shown in Fig. 3, the device request transfer processing unit 305 notifies that the control right of the shared device A601 a is assigned to the non-privileged OS 200.
Next, in step S1205, the virtual device 350 on the VM 300 issues a real IO request to the non-privileged OS shared device processing unit 202 on the OS having the control right of the shared device A601a, i.e., the non-privileged OS 200 through the inter-OS communication processing unit 301.
Next, in step S1206, the non-privileged OS shared device processing unit 202 on the non-privileged OS 200 stores the real IO request (IO request of the non-privileged OS 250) from the virtual device 350 and the priority level of the non-privileged OS 250 in the IO request holding queue 370, and then examines whether or not there is a real IO request output from another OS (privileged OS 100 or the non-privileged OS 200).
As the priority level of the OS to be stored in the IO request holding queue 370, the priority level for the shared device 601 in the non-privileged OS device activation information file 503 is used. When the non-privileged OS device activation information file 503 is not present, the lowest priority level is used. In the case of this embodiment, the non-privileged OS device activation information file 503 for the non-privileged OS 250 is not present. Thus, the lowest priority level (0) is used. In the case of the privileged OS 100, the lowest priority level (0) for each shared device 601 is used.

Then, in step S1207, the non-privileged OS shared device processing unit 202 on the non-privileged OS 200 determines whether or not the shared device A601a is already executing another IO request.
It is assumed here that the shared device A601 a is not executing another IO request.
Therefore, the non-privileged OS shared device processing unit 202 asks the shared device A601 a to execute the IO request from the non-privileged OS 250.

It is assumed here that an application on the non-privileged OS 200 issues an IO request for the shared device A601 a to the non-privileged OS shared device processing unit 202, in step S1208.
The non-privileged OS 200 recognizes that the control right of the shared device A601a belongs to the non-privileged OS 200.
Next, in step S1209, the non-privileged OS shared device processing unit 202 on the non-privileged OS 200 stores the IO request and the priority level of the OS that has sent the IO request in the IO request holding queue 370 when the non-privileged OS shared device processing unit 202 receives the IO request.
As the priority level of the OS that has transmitted the IO request, the priority level for the shared device A601a in the non-privileged OS device activation information file 503 is used. In this case, the non-privileged OS device activation information file 503 in Fig. 5 is checked, and the priority level of the OS of 100 is set.
Next, in step S1210, the non-privileged OS shared device processing unit 202 on the non-privileged OS 200 determines whether or not the shared device A601a is already executing a different IO request.
Since the shared device A601a is already executing the IO request from the non-privileged OS 250 at this point, the non-privileged OS shared device processing unit 202 asks the shared device A601a to cancel the IO request from the non-privileged OS 250.
The non-privileged OS shared device processing unit 202 deletes the canceled IO request from the IO request holding queue 370 at this time, and saves the canceled IO request in a predetermined save region.

In step S 1211, the shared device A60 1 a stops execution of the IO request having been executed so far, in response to the request to cancel the IO request from the non-privileged OS shared device processing unit 202 on the non-privileged OS 200, and notifies completion of the cancellation to the non-privileged OS shared device processing unit 202.
Next, in step S 1212, the non-privileged OS shared device processing unit 202 on the non-privileged OS 200 asks the shared device A601a to execute the IO request from the non-privileged OS 200.
Finally, after execution of the IO request from the non-privileged OS 200 has been finished, the non-privileged OS shared device processing unit 202 stores in the IO request holding queue 370 the IO request in the save region again, and then asks the shared device A601a to execute the cancelled IO request.

As described above, the device sharing system in this embodiment includes the region for holding information on the hardware to be used by each non-privileged OS, the region for managing the OS that has transmitted an IO request, and the region for holding the IO request and the priority level of the OS that has transmitted the IO request. When the non-privileged OS is activated, the device is assigned to the non-privileged OS. Further, an IO request from a different OS is transmitted to the non-privileged OS having the control right of the device.
When contention of the IO requests occurs, the priority levels of the OSs that have transmitted the IO requests are checked. The IO request of a lower priority level is canceled, and the IO request from the OS of a higher priority level is preferentially executed. Thus, even if contention of the IO requests for the shared device occurs, real-time responsiveness of the OS having the control right of the shared device can be ensured.

The above description was directed to the computer apparatus having the following functions:
(1) the shared device's function of canceling an IO request having been executed so far in response to a request from the shared device processing unit; and
(2) the shared device processing unit's function of comparing the priority level of the OS that has transmitted an IO request with the priority level of the OS that has transmitted an IO request being executed by the shared device,
   asking the shared device to cancel the process being executed so far when the priority level of the OS that has transmitted the IO request being executed by the shared device is lower, thereby getting the IO request from the OS having the higher priority level preferentially processed.
With these functions, real-time responsiveness can be ensured for the OS even if contention of the IO requests occurs for the shared device.

### Third Embodiment.

In the first and second embodiments, the non-privileged OS 200 recognizes that the non-privileged OS 200 has the control right of the shared device A601a. In this embodiment, a description will be directed to an example where the non-privileged OS 200 does not recognize which OS has the control right of the shared device A601a.

A configuration example of the computer apparatus 1 in this embodiment is the same as that shown in Fig. 6.
It means that the non-privileged OS 200 includes both of the non-privileged OS virtual device processing unit 201 and the non-privileged OS shared device processing unit 202.

Next, an operation example in this embodiment will be described.

Since an application on the non-privileged OS 200 does not know which OS obtains the control right of the shared device A601a, the application issues an IO request for the shared device A601a to the non-privileged OS virtual device processing unit 201.
The non-privileged OS virtual device processing unit 201 reads information in the device control right table 360 to determine which OS has the control right of the shared device A601a.
As a result of referring to the device control right table 360, the non-privileged OS virtual device processing unit 201 detects that its own OS (non-privileged OS 200) has the control right of the shared device A601a, and issues a real I/O request for the shared device A601 a to the non-privileged OS shared device processing unit 202.
When an application on the non-privileged OS 200 issues an IO request for the shared device B601b, as a result of referring to the device control right table 360, the non-privileged OS virtual device processing unit 201 detects that the other non-privileged OS 250 has the control right of the shared device B601b. The non-privileged OS virtual device processing unit 201 issues a real I/O request for the shared device B601b to the non-privileged OS shared device processing unit 252 of the other non-privileged OS 250.

Similar operation holds true for the non-privileged OS 250 as well. When an application on the non-privileged OS 250 issues an IO request for the shared device B601b, as a result of referring to the device control right table 360, the non-privileged OS virtual device processing unit 251 detects that its own OS (non-privileged OS 250) has the control right of the shared device B601b. The non-privileged OS virtual device processing unit 251 issues a real I/O request for the shared device B601b to the non-privileged OS shared device processing unit 252.
When an application on the non-privileged OS 250 issues an IO request for the shared device A60 1 a, as a result of referring to the device control right table 360, the non-privileged OS virtual device processing unit 251 detects that the other non-privileged OS 200 has the control right of the shared device A601 a. The non-privileged OS virtual device processing unit 251 issues a real I/O request for the shared device A601 a to the non-privileged OS shared device processing unit 202 of the other non-privileged OS 200.

As described above, even if the non-privileged OS does not recognize the OS having the control right of each shared device, the non-privileged OS can know the OS having the control right of the shared device by referring to the device control right table. An IO request can be thereby issued to the appropriate OS.

Finally, a hardware configuration example of the computer apparatus 1 shown in the first to third embodiments will be described.

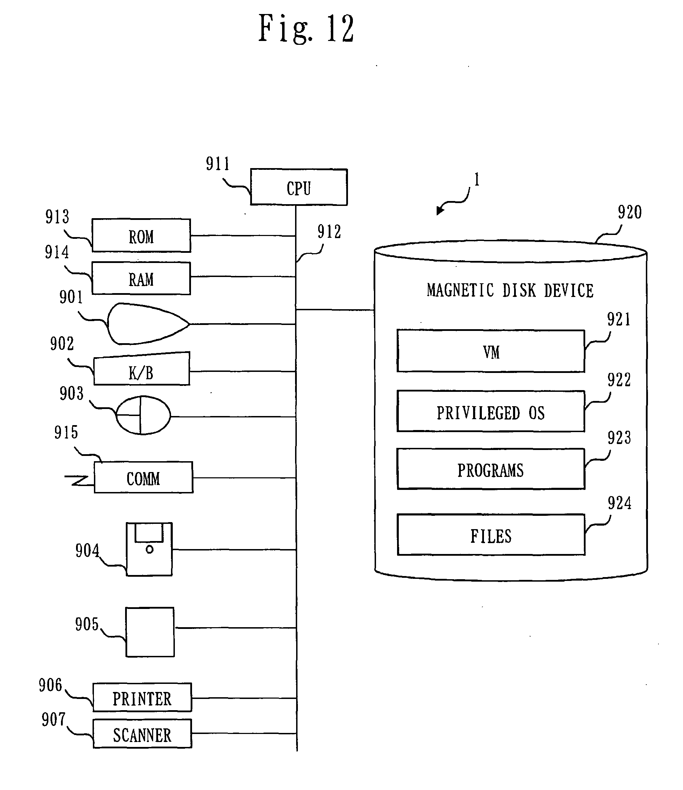

Fig. 12 is a diagram showing an example of hardware resources of the computer apparatus 1 shown in the first to third embodiments.
The configuration in Fig. 12 shows just one example of the hardware configuration of the computer apparatus 1. The hardware configuration of the computer apparatus 1 is not limited to the configuration described in Fig. 12, and a different configuration may be used for the computer apparatus 1.

Referring to Fig. 12, the computer apparatus 1 includes a CPU 911 (Central Processing Unit, which is also referred to as a central processing device, a processing unit, an arithmetic operation unit, a microprocessor, a microcomputer, or a processor) for executing a program.
The CPU 911 is connected to a ROM (Read Only Memory) 913, a RAM (Random Access Memory) 914, a communication board 915, a display device 901, a keyboard 902, a mouse 903, and a magnetic disk device 920 through a bus 912, for example, and controls these hardware devices.
Further, the CPU 911 may be connected to an FDD (Flexible Disk Drive) 904, a compact disk drive (CDD) 905, a printer device 906, and a scanner device 907. A storage device such as an optical disk device, a memory card (registered trademark), or a read/write device may be used in place of the magnetic disk device 920.
The RAM 914 is an example of a volatile memory. A storage medium such as the ROM 913, the FDD 904, the CDD 905, or the magnetic disk device 920 is an example of a nonvolatile memory. Each of these media is an example of a memory device.
The "main memory 701" described in each of the first to third embodiments is implemented by the RAM 914, for example, and the "secondary storage device 500" is implemented by the magnetic disk device 920.
Each of the communication board 915, the keyboard 902, the mouse 903, the scanner device 907, and the FDD 904 is an example of an input unit or an input device.
Each of the communication board 915, the display device 901, and the printer device 906 is an example of an output device.

The communication board 915 is connected to a network. The communication board 915 may be connected to a LAN (Local Area Network), the Internet, a WAN (Wide Area Network), a SAN (Storage Area Network), or the like, for example.

At least one portion of programs that are executed by the CPU 911 is temporarily stored in the RAM 914.
Various data necessary for processes by the CPU 911 are stored in the RAM 914.

A BIOS (Basic Input Output System) program is stored in the ROM 913, and a boot program is stored in the magnetic disk device 920.
When the computer apparatus 1 is activated, the BIOS program in the ROM 913 and the boot program in the magnetic disk device 920 are executed. A virtual machine (VM) 921 is activated by the BIOS program and the boot program.

The virtual machine (VM) 921, a privileged OS 922, programs 923, and files 924 are stored in the magnetic disk device 920.
Each program of the programs 923 is executed by the CPU 911, using the virtual machine 921 and the privileged OS 922.

A program for implementing the inter-OS communication processing unit 301, the OS activation processing unit 302, the device request conversion processing unit 303, the device assignment processing unit 304, the virtual device request transfer processing unit 305, and the virtual device 350, which are elements included in the VM 300 in each of Figs. 1 and 6, is stored in the virtual machine 921 (VM).
A program for implementing the privileged OS shared device processing unit 101, the privileged OS shared device deletion processing unit 102, the privileged OS virtual device processing unit 103, the privileged OS virtual device addition processing 104, which are elements included in the privileged OS 100 in each of Figs. 1 and 6, is stored in the privileged OS 922.

The program for implementing the non-privileged OS virtual device processing unit 201, the non-privileged OS shared device processing unit 202, the non-privileged OS virtual device processing unit 251, and the non-privileged OS shared device processing unit 252, which are elements included in the non-privileged OS 200 and the non-privileged OS 250 in Figs. 1 and 6, is stored in the programs 923.
Application programs that are executed by the privileged OS and the non-privileged OSs are also stored in the programs 923.
The program in the virtual machine (VM) 921, the program in the privileged OS 922, and the program in the programs 923 are read and executed by the CPU 911.

The non-privileged OS image file 501, the non-privileged OS activation information file 502, the non-privileged OS device activation information file 503, the device control right table 360, and the IO request holding queue 370 shown in each of Figs. 1 and 6 are included in the files 924.

In the files 924, information, data, signal values, variable values, and parameters showing results of the processes described in the first to third embodiments as "judgment of", "determination of ---", "computation of ---" "comparison of ---", "updating of ---", "setting of ---", "registration of ---", "selection of ---", and "change of", are stored as respective items of "---files", "---databases".

The "---files" and "---databases" are stored in storage media such as a disk and a memory. The information, the data, the signal values, the variable values, and the parameters stored in the storage media such as the disk and the memory are loaded into a main memory or a cache memory by the CPU 911 through a read/write circuit. Then, the information, the data, the signal values, the variable values, and the parameters that have been read are used for operations of the CPU such as extraction, retrieval, reference, comparison, arithmetic operation, computation, processing, editing, output, printing, and display.
During the operations of the CPU such as extraction, retrieval, reference, comparison, arithmetic operation, computation, processing, editing, output, printing, and display, the information, the data, the signal values, the variable values, and the parameters are temporarily stored in the main memory, a register, the cache memory, a buffer memory, or the like.
An arrow portion in the flowcharts described in the first to third embodiments mainly indicates a data or signal input/output. The data and the signal values are recorded in recording media such as the memory of the RAM 914, the flexible disk of the FDD 904, the compact disk of the CDD 905, the magnetic disk of the magnetic disk device 920, and other optical disk, minidisk, and DVD. The data and signals are on-line transmitted through the bus 912, signal lines, cables, or the other transmission media.

As described above, the computer apparatus shown in the first to third embodiments is the computer including the CPU as the processing device, the memories, the magnetic disks, and the like as memory devices, the keyboard, the mouse, and the communication board as input devices, and the display device and the communication board as output devices. Then, as described above, the functions shown as the "---units" are implemented by these processing device, memory devices, input devices, and output devices.

### Description of Reference Signs

1: computer apparatus
100: privileged OS
101: privileged OS shared device processing unit
102: privileged OS shared device deletion processing unit
103: privileged OS virtual device processing unit
104: privileged OS virtual device addition processing unit
200: non-privileged OS
201: non-privileged OS virtual device processing unit
202: non-privileged OS shared device processing unit
251: non-privileged OS virtual device processing unit
252: non-privileged OS shared device processing unit
300: VM
301: inter-OS communication processing unit
302: OS activation processing unit
303: device request conversion processing unit
304: device assignment processing unit
305: device request transfer processing unit
350: virtual device
360: device control right table
370: IO request holding queue
400: hardware
500: secondary storage device
501: non-privileged OS image file
502: non-privileged OS activation information file
503: non-privileged OS device activation information file
601: shared device
701: main memory

## Claims

1. A computer apparatus to which one or more devices are connected, comprising:
a privileged OS (Operating System) to which a control right of each of the one or more devices is given;
one or more non-privileged OSs to which no control right of any device is given;
an information storage unit that stores specified device information indicating a non-privileged OS and a specified device specified for the non-privileged OS; and
a control right administration unit that refers to the specified device information when one of the non-privileged OSs is activated after activation of the privileged OS, and, if the non-privileged OS to be activated has the specified device, transfers the control right of the specified device for the non-privileged OS to be activated from the privileged OS to the non-privileged OS to be activated.

2. The computer apparatus according to claim 1, wherein
a priority level of the privileged OS is set for each device;
the information storage unit stores the specified device information indicating a non-privileged OS and a specified device specified for the non-privileged OS, and a priority level of the non-privileged OS for the specified device; and
the control right administration unit refers to the specified device information when one of the non-privileged OS is activated after activation of the privileged OS, compares the priority level of the non-privileged OS to be activated for the specified device with the priority level of the privileged OS for the specified device if the non-privileged OS to be activated has the specified device, and transfers the control right of the specified device to the non-privileged OS to be activated if the priority level of the non-privileged OS to be activated is higher.

3. The computer apparatus according to claim 2, wherein
when the control right of one of the devices is transferred to one of the non-privileged OSs and then the non-privileged OS for which the device is indicated as the specified device in the specified device information is activated, the control right administration unit compares the priority level of the non-privileged OS to be activated for the device with the priority level of the non-privileged OS having the control right of the device, and transfers the control right of the device to the non-privileged OS to be activated if the priority level of the non-privileged OS to be activated is higher.

4. The computer apparatus according to claim 1, wherein
when each non-privileged OS is to use the device whose control right belongs to the privileged OS, each non-privileged OS outputs to the device to be used a use request for the device to be used through the privileged OS and then uses the device to be used,
and when each non-privileged OS is to use the device whose control right has been transferred to the OS itself by the control right administration unit and then belongs to the OS itself, each non-privileged OS outputs to the device to be used the use request for the device to be used, not through the privileged OS or any other of the non-privileged OSs and then uses the device to be used.

5. The computer apparatus according to claim 4, wherein
when each non-privileged OS is to use the device whose control right belongs to a different non-privileged OS, each non-privileged OS outputs to the device to be used a use request for the device to be used, through the different non-privileged OS and then uses the device to be used.

6. The computer apparatus according to claim 5, wherein
when each non-privileged OS inputs a use request for the device under control whose control right belongs to the OS itself, from a different OS, each non-privileged OS outputs the input use request to the device under control.

7. The computer apparatus according to claim 5, further comprising:
an OS determination unit that inputs a use request for one of the devices output from one of the OSs, refers to device control right information indicating, for each device, which one of the OSs has the control right of the device, determines the OS having the control right of the device targeted by the input use request, and then outputs the use request to the determined OS.

8. The computer apparatus according to claim 7, wherein
the control right administration unit updates the device control right information every time the control right administration unit transfers the control right of any device.

9. The computer apparatus according to claim 1, wherein:
a priority level of the privileged OS and a priority level of each non-privileged OS are set for each device; and
the computer apparatus further includes:
an execution administration unit that, during a use request for one of the devices issued from one of the OSs, being executed, when a use request for the device is issued from a different OS, compares the priority level for the device of the OS being an issuance source of the newly issued use request with the priority level for the device of the OS being an issuance source of the use request which is being executed, stops execution of the use request which is being executed and starts execution of the newly issued use request, if the priority level of the OS being the issuance source of the newly issued use request is higher,.

10. The computer apparatus according to claim 1, wherein
the computer apparatus includes a virtual machine with which the privileged OS and each non-privileged OS run; and
the control right administration unit is included in the virtual machine.
